(19) Europäisches Patentamt
European Patent Office
Office européen des brevets

(11) Veröffentlichungsnummer: **0 059 790**
**B1**

(12) # EUROPÄISCHE PATENTSCHRIFT

(45) Veröffentlichungstag der Patentschrift: **05.06.85**

(51) Int. Cl.⁴: **G 02 F 1/133**

(21) Anmeldenummer: **81108936.6**

(22) Anmeldetag: **26.10.81**

(54) **Verfahren zur Herstellung dünner Polyimidschichten.**

(30) Priorität: **27.02.81 DE 3107633**

(43) Veröffentlichungstag der Anmeldung: **15.09.82 Patentblatt 82/37**

(45) Bekanntmachung des Hinweises auf die Patenterteilung: **05.06.85 Patentblatt 85/23**

(84) Benannte Vertragsstaaten: **DE FR GB IT**

(56) Entgegenhaltungen:
**DE-A- 2 638 091**
**FR-A- 2 294 462**

(73) Patentinhaber: **Siemens Aktiengesellschaft**
**Berlin und München Wittelsbacherplatz 2**
**D-8000 München 2 (DE)**

(72) Erfinder: **Ahne, Hellmut, Dr.**
**Heidestrasse 6**
**D-8551 Röttenbach (DE)**
Erfinder: **Kleeberg, Wolfgang, Dr.**
**Hessenstrasse 7**
**D-8520 Erlangen (DE)**
Erfinder: **Rubner, Roland, Dr.**
**Buchenring 15**
**D-8551 Röttenbach (DE)**
Erfinder: **Krüger, Hans, Dipl.-Phys.**
**Peralohstrasse 13**
**D-8000 München 83 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

EP 0 059 790 B1

**Beschreibung**

Die Erfindung betrifft ein Verfahren zur Herstellung dünner Polyimid-Orientierungsschichten für Flüssigkristalldisplays durch Aufbringen einer Lösung eines Polyimid-Präpolymeren auf ein Substrat und nachfolgende Temperung.

Die Erzeugung dünner Schichten, d. h. von Schichten mit einer Dicke $\leq 0{,}2\ \mu m$, ist oft sehr problematisch. Derartige Schichten werden beispielsweise als Orientierungsschichten in Form sogenannter Reibeschichten in Flüssigkristalldisplays eingesetzt, wo sie nicht nur transparent sein müssen und lediglich eine geringe Eigenfärbung aufweisen dürfen, sondern es muß dabei insbesondere auch gewährleistet sein, daß sie eine homogene geschlossene Oberfläche besitzen.

Dünne Schichten aus organischen Materialien werden bislang im allgemeinen aus Polymeren mit Hilfe der Schleudertechnik, nach dem Roller-Coating-Verfahren oder durch Wirbelsintern hergestellt. Dabei werden jedoch häufig keine ausreichend dünnen Schichten erhalten.

Zur Herstellung von Polyimid-Orientierungsschichten für Flüssigkristalldisplays wird im allgemeinen in der Weise vorgegangen, daß eine Polyamidocarbonsäure in einem Lösungsmittel gelöst und auf ein transparentes Substrat, d. h. eine Elektrodenschicht bzw. Elektrodenbasisplatte, aufgetragen wird. Nach dem Beschichten wird der Filmüberzug auf höhere Temperaturen erhitzt, d. h. getempert, wodurch aus der Polyamidocarbonsäure, d. h. dem Präpolymeren, das Polyimid gebildet wird (vgl. dazu DE-A-26 38 091). Problematisch bei der Verwendung sehr verdünnter Lösungen, die dabei im allgemeinen erforderlich sind, ist jedoch die Benetzbarkeit und damit die Homogenität der erhaltenen Schichten.

Aufgabe der Erfindung ist es, ein Verfahren der eingangs genannten Art in der Weise auszugestalten, daß dabei die Herstellung von Schichten mit Schichtstärken $\leq 0{,}2\ \mu m$ ermöglicht wird, die gleichzeitig einen homogenen Charakter aufweisen und eine gute Haftfähigkeit besitzen.

Dies wird erfindungsgemäß dadurch erreicht, daß filmbildende Präpolymere hochwärmebeständiger Polyimide verwendet werden, die beim Tempern durch Abspaltung höhermolekularer Alkohole einen hohen Anteil an flüchtigen Produkten abgeben und dabei in die Polyimide übergeführt werden.

Beim erfindungsgemäßen Verfahren wird zur Herstellung dünner zusammenhängender Filme demnach in der Weise vorgegangen, daß zunächst auf Substraten oder Folien dünne Beschichtungen erzeugt werden. Diese Beschichtungen geben dann beim nachfolgenden Temperprozeß flüchtige Bestandteile ab, wobei sich eine Reduzierung der Schichtstärke ergibt. Die Schichtstärkenreduzierung kann dabei 40 % und mehr betragen, ohne daß die Qualität der Schichten nachteilig beeinflußt wird.

Beim erfindungsgemäßen Verfahren werden Präpolymere, d. h. oligomere und/oder polymere Vorstufen, von Polyimiden eingesetzt, die filmbildende Eigenschaften besitzen und deren Filmdicke durch einen Temperprozeß stark reduziert wird. Die dabei gebildeten Filme und Folien sind thermisch hochbelastbar und ihre Qualität — hinsichtlich Homogenität und Haftung — wird durch den Temperprozeß praktisch nicht oder sogar positiv beeinflußt.

Das erfindungsgemäße Verfahren eignet sich in besonderem Maße zur Herstellung von Reibeschichten, die zur Orientierung der Flüssigkristalle in Flüssigkristalldisplays dienen. Bei diesem Verfahren können nämlich höherkonzentrierte und besser benetzende Lösungen eingesetzt werden, so daß die Schwierigkeiten, wie sie sich bei der Verwendung verdünnter Lösungen ergeben, vermieden werden. Dennoch lassen sich mit diesem Verfahren, auch mit konventionelle, Beschichtungstechniken, wie Roller-Coating und Schleudern, homogene Schichten mit Schichtstärken $\leq 0{,}02\ \mu m$ herstellen.

Beim erfindungsgemäßen Verfahren werden Präpolymere verwendet, welche beim Tempern höhermolekulare Alkohole abspalten, wobei sie in die Polyimide übergehen. Derartige Verbindungen sind insbesondere Polyamidocarbonsäureester.

Die beim erfindungsgemäßen Verfahren eingesetzten Polyimid-Präpolymeren weisen im allgemeinen folgende Struktur auf :

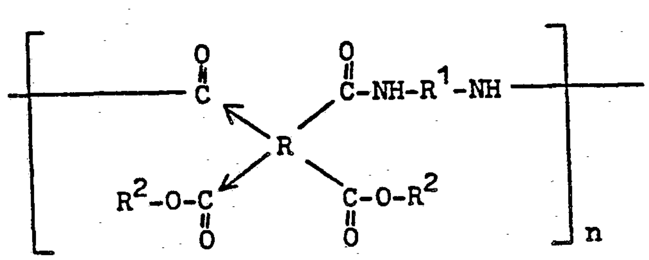

(1)

Mit den Pfeilen soll dabei die Tatsache zum Ausdruck gebracht werden, daß die beiden fraglichen Substituenten an R ihre Stellung vertauschen können. Dies ist deshalb von Bedeutung, weil es sich bei R, wie nachfolgend noch erläutert wird, um einen cyclischen Rest handelt.

In Formel (1) bedeutet n eine ganze Zahl von 2 bis etwa 100, für die Reste R, $R^1$ und $R^2$ gilt folgendes :

R ist ein — gegebenenfalls halogenierter — zumindest partiell aromatischer und/oder heterocyclischer tetravalenter, d. h. tetrafunktioneller Rest, bei dem jeweils zwei Valenzen in Nachbarstellung zueinander

angeordnet sind ; weist der Rest R mehrere aromatische und/oder heterocyclische Strukturelemente auf, so befinden sich die Valenzpaare jeweils an endständigen derartigen Strukturelementen ;

$R^1$ ist ein — gegebenenfalls halogenierter — divalenter, d. h. difunktioneller Rest aliphatischer und/oder cycloaliphatischer, gegebenenfalls Heteroatome aufweisender, und/oder aromatischer und/oder heterocyclischer Struktur ;

$R^2$ ist ein Alkylrest oder ein Hydroxyalkylrest, der auch verestert sein kann (mit gesättigten oder ungesättigten Carbonsäuren).

Die Reste R, $R^1$ und $R^2$ haben insbesondere folgende Bedeutung :

R = 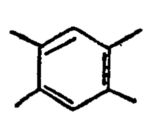, 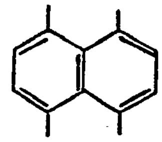, 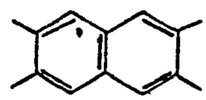,

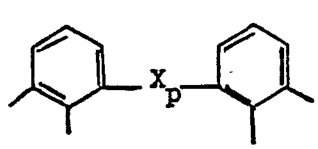, 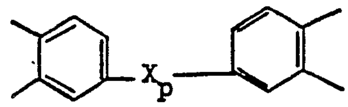,

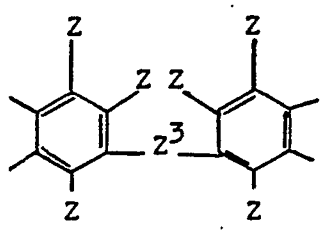, 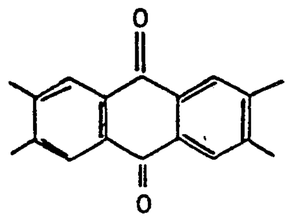,

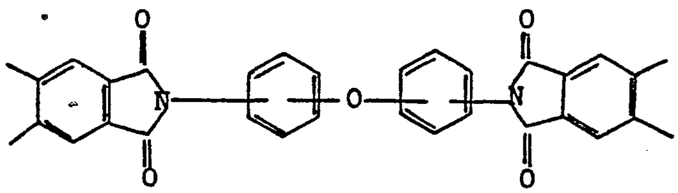,

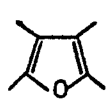 und 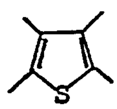,

wobei p =0 oder 1 ist und X für einen der folgenden Reste steht :

X = 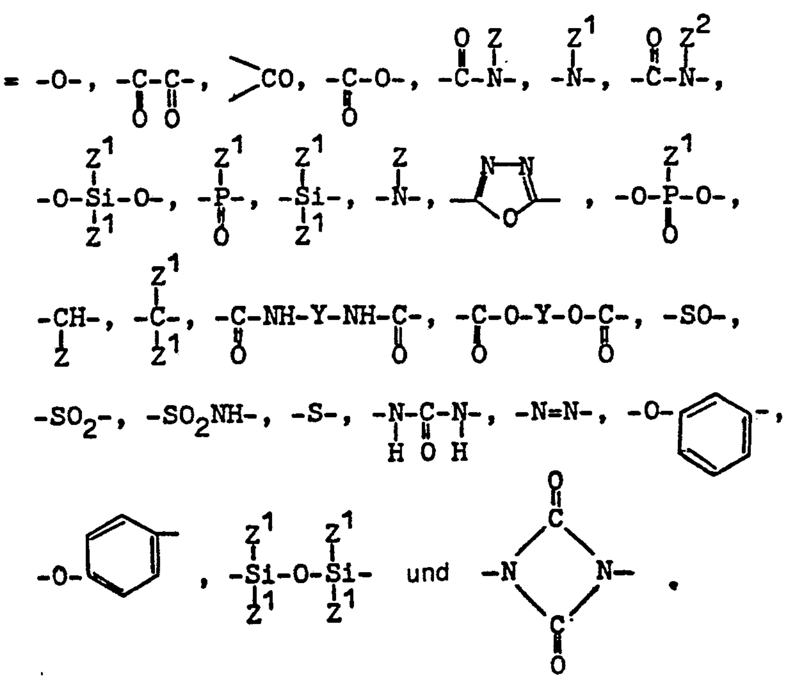

Für die weiteren Reste gilt :

Y = 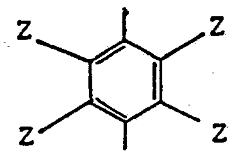 , $-(CH_2)_o-$ mit o = 2 bis 10,

und

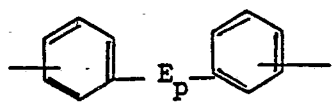 mit p = 0 oder 1 ;

Z = H oder Alkyl mit 1 bis 6 Kohlenstoffatomen ;
$Z^1$ = Alkyl mit 1 bis 10 Kohlenstoffatomen oder Aryl ;
$Z^2$ = Aryl oder Heteroaryl ; und

$Z^3$ = 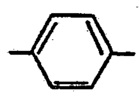 oder 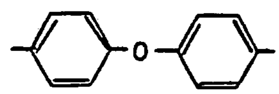 ;

E = 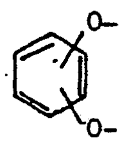 , 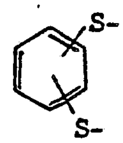 , 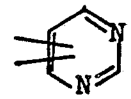 ,

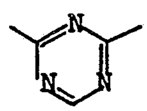 , 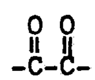 , 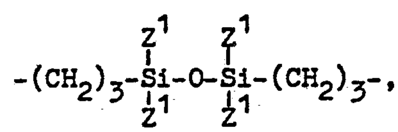 ,

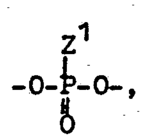 , 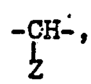 , 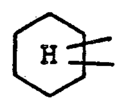 , $-(CH_2)_q-$,

$-(CF_2)_r-$, -SO-, 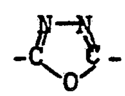 , $-SO_2NH-$, 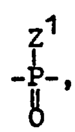 ,

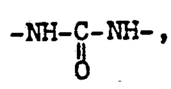 , 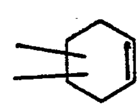 , -N=N-, -S-,

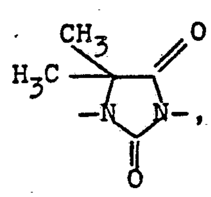 , -O-, 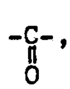 , 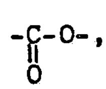 , 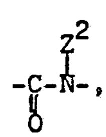 , 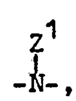 ,

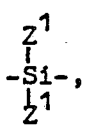 , 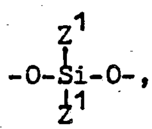 , 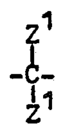 , $-SO_2-$ und 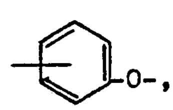 ,

wobei q = 2 bis 14 und r = 2 bis 18, und Z, $Z^1$ und $Z^2$ wie vorstehend definiert sind.

$R^1$ = 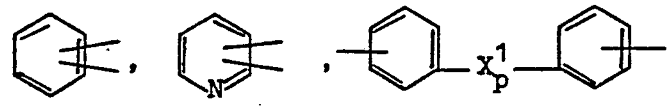 ,

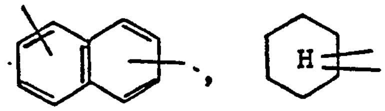 , $-(CH_2)_q-$, $-(CF_2)_r-$,

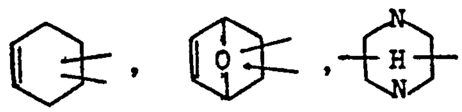 und

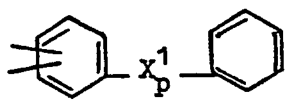 ,

wobei p = 0 oder 1, q = 2 bis 14 und r = 2 bis 18.

Für $X^1$ gilt :

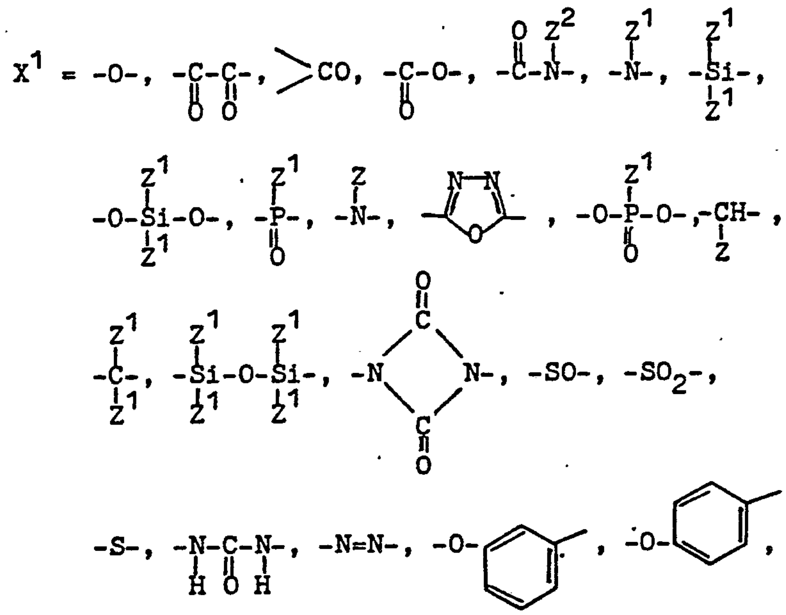

$-SO_2NH-$ und

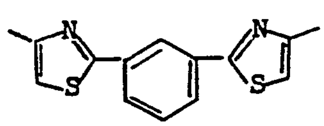 ,

wobei Z, $Z^1$ und $Z^2$ wie vorstehend definiert sind.

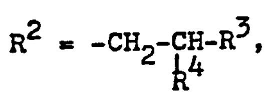

wobei für $R^3$ und $R^4$ folgendes gilt :

$R^3$ = -H, -OH, -SH und 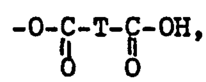

mit $T = -(CH_2)_t-$, $-CH=CH-$, $-CH_2-C(=CH_2)-$ oder 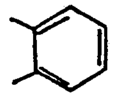,

wobei t = 2 bis 20.

$R^4 = -H$, $-O-C(=O)-C(X^2)=CH_2$, $-O-(CH_2)_s-NH-$ 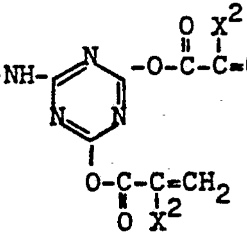,

$-(CH_2)_u-CH_3$, 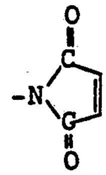 und

$-O-[(CH_2)_r-O-]_u-(CH_2)_m-CH_3$,

$X^2$ = H, $-CH_3$, —Cl, —Br, —C ≡ N, und
r = 2 bis 18, s = 2 bis 16, u = 0 bis 10 und
m = 0 bis 17.

Geeignete Verbindungen der vorstehend genannten Art sind beispielsweise in der DE-A-23 08 830 beschrieben. Geeignet sind ferner Additionsprodukte olefinisch ungesättigter Monoepoxide an carboxylgruppenhaltige Polyadditionsprodukte aus aromatischen und/oder heterocyclischen Tetracarbonsäuredianhydriden und Diaminoverbindungen (vgl. dazu : DE-A-29 33 826). Die bezorzugt eingesetzten Tetracarbonsäuredianhydride sind dabei das Anhydrid der Pyromellithsäure und der Benzophenontetracarbonsäure. Verwendung findet beispielsweise aber auch das Trimellithsäureanhydrid folgender Struktur (2) :

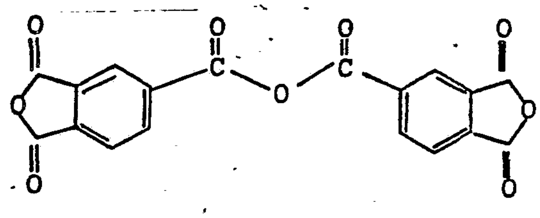

(2)

bzw. das Diesterdianhydrid der Struktur (3) :

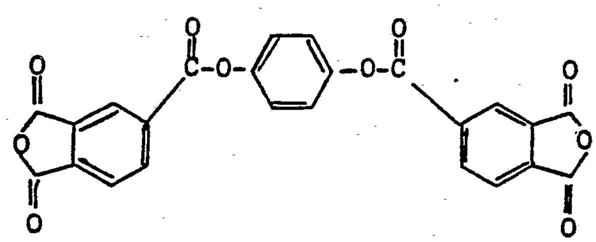

(3)

Bei den Diaminoverbindungen ist der 4.4'-Diaminodiphenylether bevorzugt.

Anhand der nachfolgenden Formel (4) soll die Struktur der beim erfindungsgemäßen Verfahren bevorzugt eingesetzten Polyimid-Präpolymeren beispielhaft verdeutlicht werden :

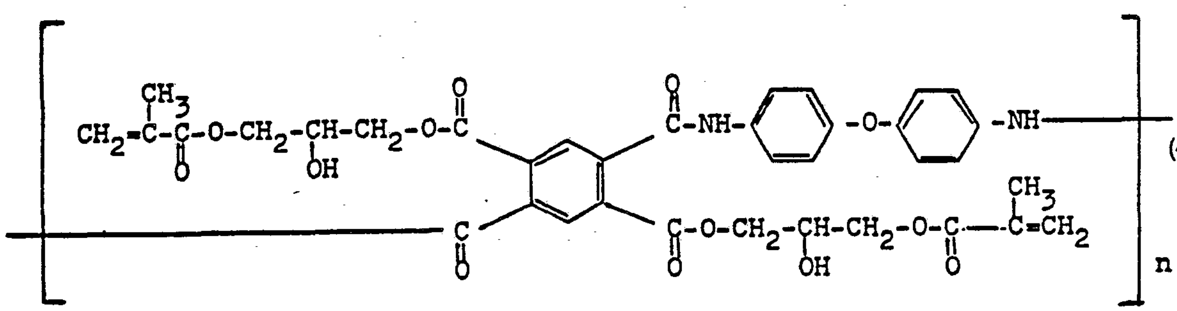

(4)

In Formel (4) ist eine strahlungsreaktive Polyimid-Vorstufe dargestellt und zwar das Additionsprodukt von Glycidylmethacrylat an das Polyadditionsprodukt aus Pyromellithsäuredianhydrid und 4.4'-Diaminodiphenylether.

Die beim erfindungsgemäßen Verfahren eingesetzten Präpolymeren weisen als Grundbausteine bevorzugt aromatische Carbonsäuren auf und ergeben somit bei der thermischen Behandlung Polyimide mit der folgenden Struktureinheit (5) :

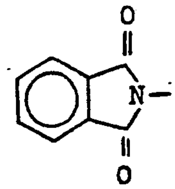

(5)

Der Begriff « Polyimide » soll dabei aber auch Polyesterimide (6) und Polyamidimide (7) umfassen :

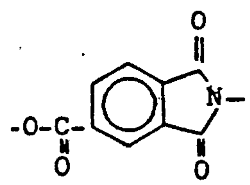

(6)

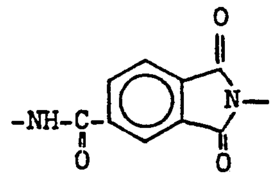

(7)

Die beim erfindungsgemäßen Verfahren bevorzugt eingesetzten Polyimid-Präpolymeren werden vorteilhaft in der Weise hergestellt, daß ein aromatisches und/oder heterocyclisches Tetracarbonsäuredianhydrid mit einer Diaminoverbindung zu einem carboxylgruppenhaltigen Reaktionsprodukt umgesetzt und das Reaktionsprodukt — bei Raumtemperatur oder bei Temperaturen bis ca. 100 °C — in einem organischen Lösungsmittel, gegebenenfalls in Gegenwart eines aminischen Katalysators, mit einem olefinisch ungesättigten Monoepoxid zur Reaktion gebracht wird. Die durch Addition des Monoepoxids an das carboxylgruppenhaltige Reaktionsprodukt erhaltene Vorstufe kann ferner noch mit cyclischen Carbonsäureanhydriden umgesetzt werden. Auf diese Weise kann die Größe der beim Tempern abspaltbaren Gruppen noch weiter erhöht werden, d. h. es ergibt sich die Möglichkeit, die Schichtdickenreduzierung gezielt einzustellen bzw. zu beeinflussen.

Beim erfindungsgemäßen Verfahren ist es ferner von Vorteil, wenn der Präpolymerenlösung monomere, oligomere und/oder polymere Verbindungen zugesetzt werden, welche bei Temperaturen ≥ 250 °C, d. h. beim Temperprozeß, verflüchtigt bzw. zu flüchtigen Bestandteilen abgebaut werden. Auf diese Weise kann nämlich eine weitere Verringerung der Schichtdicke erreicht, d. h. eine Erhöhung des Effektes der Schichtstärkenreduzierung bewirkt werden.

Geeignete Zusätze, die sich beim Tempern verflüchtigen und zu Schichtdickenreduzierungen von 40 % und darüber führen können, sind beispielsweise lichtempfindliche Diazochinone (o-Chinon- und o-Naphthochinondiazide). Geeignete Verbindungen dieser Art, die an sich bekannt sind, sind beispielsweise :

N-Dehydroabietyl-5-diazo-5(6)-oxo-1-naphthalinsulfonamid

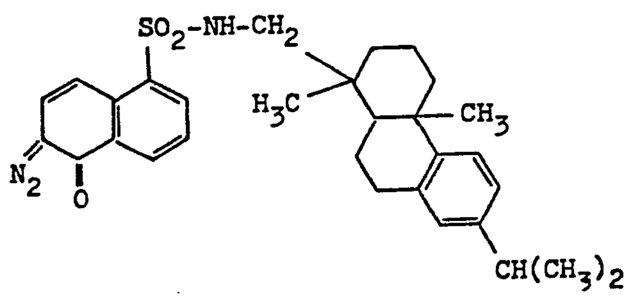

und der Bis-naphthochinon-(1.2)-diazid-(2)-5-sulfonsäureester von β.β-Bis(4-hydroxyphenyl)-propan

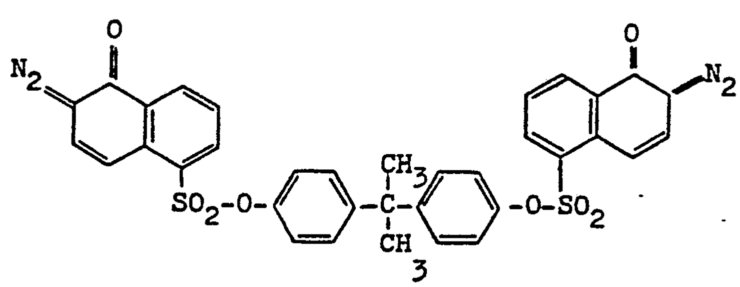

Weitere Verbindungen sind beispielsweise : N-Dehydroabietyl-3-diazo-4(3)-oxo-1-naphthalinsulfonamid, N-Dehydroabietyl-5.6.7.8-tetrahydro-4-diazo-3(4)-oxo-2-naphthalinsulfonamid und N-Dextropimaryl-3-diazo-4-oxo-1.5-cyclohexadien-1-sulfonamid.

Weitere geeignete Zusätze, welche bei Temperaturen ≥ 250 °C verflüchtigt werden, sind beispielsweise oligomere Ester und Ether mit aliphatischen oder cycloaliphatischen Strukturelementen, wobei auch lediglich eine partielle Zersetzung in flüchtige Spaltprodukte erfolgen kann. Unter diesem Aspekt eignen sich auch polymere Zusätze, wie Polymethylmethacrylat und Polyolefinsulfone, welche sich bei der thermischen Zersetzung verflüchtigen und damit zur Schichtdickenreduzierung beitragen.

Anhand von Ausführungsbeispielen soll die Erfindung noch näher erläutert werden.

## Beispiel 1

21,8 Gewichtsteile Pyromellithsäuredianhydrid werden in 100 Volumenteilen Hexamethylphosphorsäuretriamid gelöst, unter Eiskühlung und Rühren tropfenweise mit 26 Gewichtsteilen Methacrylsäure-2-hydroxyethylester versetzt und dann 4 Tage bei Raumtemperatur gerührt. Die Lösung wird anschließend bei einer Temperatur von − 5 bis − 10 °C mit 24 Gewichtsteilen Thionylchlorid versetzt und dann noch eine Stunde gerührt. Nachfolgend wird eine Lösung von 19,8 Gewichtsteilen 4.4′-Diaminodiphenylether in 50 Volumenteilen Dimethylacetamid zugetropft und — ohne Kühlung — noch eine weitere Stunde gerührt. Durch Zutropfen der Lösung zu 2 000 Volumenteilen Waser wird der Polyamidocarbonsäureester ausgefällt und mit Wasser und Ethanol gewaschen.

10 g des Polyamidocarbonsäureesters werden zusammen mit 0,1 g Vinyltriethoxymethoxysilan in 90 ml N-Methylpyrrolidon gelöst und nach dem Roller-Coating-Verfahren auf ein Glassubstrat aufgebracht. Nach dem Trocknen bei ca. 100 °C im Umluftofen (mit 25 % Frischluftzufuhr) für die Dauer von 30 min beträgt die Schichtstärke 0,04 µm. Anschließend wird der erhaltene Film 1/2 Stunde bei ca. 275 °C und 1/2 Stunde bei ca. 400 °C getempert. Dabei resultiert ein Film mit einer Schichtstärke von 0,02 µm, wobei die Oberflächenqualität des Films nicht beeinträchtigt ist.

## Beispiel 2

10 g eines entsprechend Beispiel 1 hergestellten Polyamidocarbonsäureesters werden zusammen mit 10 g N-Dextropimaryl-3-diazo-4-oxo-1.5-cyclohexadien-1-sulfonamid in 180 ml N-Methylpyrrolidon gelöst. Nach dem Roller-Coating-Verfahren wird mit dieser Lösung auf einem 5 cm . 5 cm großen Glassubstrat ein 0,1 µm dicker Film erzeugt. Die Schichtstärke bezieht sich dabei auf den bei 80 °C im Durchlaufofen getrokneten Film. Nach der anschließenden Temperung bei ca. 275 °C und ca. 400 °C; jeweils für 1/2 Stunde, beträgt die Endschichtdicke des homogenen Filmes 0,03 µm.

## Beispiel 3

Zu 65,4 Gewichtsteilen Pyromellithsäuredianhydrid (0,3 Mol) in 450 Volumenteilen N-Methylpyrrolidon werden unter Rühren 45 Gewichtsteile 4.4′-Diaminodiphenylether (0,23 Mol) gegeben und anschließend wird noch 2 Stunden bei Raumtemperatur gerührt. Dann werden dem Reaktionsgemisch 2 Gewichtsteile Methacrylsäure-2-hydroxyethylester (0,016 Mol) zugesetzt, um die noch vorhandenen endständigen Anhydridgruppen zu binden. Nach 2 stündigem Rühren bei Raumtemperatur werden zur Reaktionslösung 150 Volumenteile Glycidylmethacrylat, 1,5 Volumenteile Benzyldimethylamin und 0,1 Gewichtsteile Hydrochinon gegeben. Anschließend wird die Lösung unter Rühren 23 Stunden auf eine Temperatur von 50 bis 60 °C erwärmt und dann unter kräftigem Rühren zu 4 000 Volumenteilen Ethanol getropft. Der dabei gebildete Niederschlag wird abgesaugt und im Vakuum bei Raumtemperatur getrocknet.

35 Gewichtsteile der erhaltenen Polyimid-Vorstufe werden in 100 Volumenteilen N-Methylpyrrolidon gelöst und mit 10 Gewichtsteilen Maleinsäuredianhydrid versetzt. Nach einer Reaktionsdauer von 5 Tagen bei Raumtemperatur wird die Harzlösung mit 50 Volumenteilen N-Methylpyrrolidon verdünnt und aus 2500 Volumenteilen Wasser gefällt. Das erhaltene Harz wird mit Wasser gewaschen und im Vakuum getrocknet.

10 g des auf diese Weise erhaltenen Polyamidocarbonsäureesters werden zusammen mit 0,1 g Vinyltriethoxymethoxysilan in 92 ml N-Methylpyrrolidon gelöst und bei 3 000 U/min auf ein Glassubstrat aufgeschleudert. Nach dem Trocknen im Umluftofen (mit Frischluftzufuhr) bei ca. 110 °C für die Dauer von 25 min beträgt die Schichtdicke 0,08 µm. Nach dem anschließenden Tempern, jeweils für 1/2 Stunde, bei ca. 275 °C und ca. 400 °C beträgt die Schichtdicke 0,03 µm. Der auf diese Weise hergestellte dünne Film weist eine homogene Oberfläche auf.

**Patentansprüche**

1. Verfahren zur Herstellung dünner Polyimid-Orientierungsschichten für Flüssigkristalldisplays

durch Aufbringen einer Lösung eines Polyimid-Präpolymeren auf ein Substrat und nachfolgende Temperung, dadurch gekennzeichnet, daß filmbildende Präpolymere hochwärmebeständiger Polyimide verwendet werden, die beim Tempern durch Abspaltung höhermolekularer Alkohole einen hohen Anteil an flüchtigen Produkten abgeben und dabei in die Polyimide übergeführt werden.

2. Verfahren nach Anspruch 1, dadurch gekennzeichnet, daß der Präpolymerenlösung Monomere, Oligomere und/oder polymere zugesetzt werden, welche bei Temperaturen ≥ 250 °C zumindest teilweise verflüchtigt werden.

3. Verfahren nach Anspruch 2, dadurch gekennzeichnet, daß der Präpolymerenlösung ein Diazochinon zugesetzt wird.

4. Verfahren nach einem der Ansprüche 1 bis 3, dadurch gekennzeichnet, daß der präpolymerenlösung ein Silan zugesetzt wird.

**Claims**

1. A process for the production of thin polyimide orientation layers for liquid crystal displays by the deposition of a solution of a polyimide prepolymer on a substrate and subsequent heat treatment, characterised in that film-producing prepolymers of highly heat-resistant polyimides are used which during heat treatment by the splitting-off of high-molecular alcohols, emit a large amount of volatile products and thereby are converted into the polyimides.

2. A process as claimed in Claim 1, characterised in that monomers, oligomers and/or polymers, which are at least partially volatilized at temperatures ≥ 250 °C, are added to the prepolymer solution.

3. A process as claimed in Claim 2, characterised in that a diazoquinone is added to the prepolymer solution.

4. A process as claimed in one of Claims 1 to 3, characterised in that a silane is added to the prepolymer solution.

**Revendications**

1. Procédé de préparation de couches d'orientation minces en polyimide pour des dispositifs d'affichage à cristaux liquides, par dépôt d'une solution d'un prépolymère de polyimide sur un substrat et, ensuite, par cuisson, carcatérisé en ce qu'il consiste à utiliser des prépolymères filmogènes de polyimide stables à une température élevée qui dégagent à la cuisson, par élimination d'alcools de masse moléculaire élevée, une proportion importante de produits volatils et qui se transforment en les polyimides.

2. Procédé suivant la revendication 1, caractérisé en ce qu'il consiste à ajouter à la solution de prépolymères des monomères, des oligomères et/ou des polymères, qui sont volatilisés au moins partiellement à des températures supérieures ou égales à 250 °C.

3. Procédé suivant la revendication 2, caractérisé en ce qu'il consiste à ajouter à la solution de prépolymères une diazoquinone.

4. Procédé suivant l'une des revendications 1 à 3, caractérisé en ce qu'il consiste à ajouter à la solution de prépolymères un silane.